# EUROPEAN PATENT APPLICATION

(11) **EP 4 027 445 A1**
(43) Date of publication of application: **13.07.2022**
(21) Application number: 20903841.3
(22) Date of filing: 18.12.2020
(51) Int. Cl.: H01M 50/40, H01M 50/409, H01M 10/058, H01M 10/052, H01M 4/04

(54) **SEPARATOR, LITHIUM SECONDARY BATTERY INCLUDING SEPARATOR, AND METHOD FOR MANUFACTURING SAME**

(30) Priority: 20.12.2019 KR 20190172442
(71) Applicant: LG ENERGY SOLUTION, LTD., Seoul 07335 (KR)
(72) Inventor: CHOI, Hyun-Jun, Daejeon 34122 (KR); KIM, Dae-Soo, Daejeon 34122 (KR); KIM, Young-Deok, Daejeon 34122 (KR); KIM, Seok-Koo, Daejeon 34122 (KR)
(74) Representative: Hoffmann Eitle
(86) International application number: PCT/KR2020/018712
(87) International publication number: WO 2021/125895

(57) **Abstract**

Disclosed is a method of manufacturing a lithium secondary battery, which includes preparing a preliminary separator by coating a porous coating layer forming slurry on a porous polymer substrate and drying the same under a humidified condition; putting an electrode assembly, in which the preliminary separator is interposed between a positive electrode and a negative electrode, into a battery case and injecting an electrolytic solution therein; and thermally treating the electrode assembly, and a lithium secondary battery manufactured by the method. Accordingly, it is possible to provide a separator with significantly improved ionic conductivity compared to separators commonly used in the art

## Description

### TECHNICAL FIELD

The present disclosure relates to a separator that may be used in an electrochemical device such as a lithium secondary battery, an electrochemical device including the separator, and a manufacturing method thereof.

The present application claims priority to Korean Patent Application No. 10-2019-0172442 filed on December 20, 2019 in the Republic of Korea, the disclosures of which are incorporated herein by reference.

### BACKGROUND ART

Recently, energy storage technology has been given an increasing attention. Efforts into research and development for electrochemical devices have been actualized more and more, as the application of energy storage technology has been extended to energy for cellular phones, camcorders and notebook PC and even to energy for electric vehicles. In this context, electrochemical devices have been most spotlighted. Among such electrochemical devices, development of rechargeable secondary batteries has been focused. More recently, active studies have been conducted about designing a novel electrode and battery in order to improve the capacity density and specific energy in developing such batteries.

Among the commercially available secondary batteries, lithium secondary batteries developed in the early 1990's have been spotlighted, since they have a higher operating voltage and significantly higher energy density as compared to conventional batteries, such as Ni-MH, Ni-Cd and sulfuric acid-lead batteries using an aqueous electrolytic solution.

Although such electrochemical devices, such as lithium secondary batteries, have been produced from many production companies, safety characteristics thereof show different signs. Evaluation and securement of safety of such electrochemical devices are very important. The most important consideration is that electrochemical devices should not damage users upon their malfunction. For this purpose, safety standards strictly control ignition and smoke emission in electrochemical devices. With regard to safety characteristics of electrochemical devices, there is great concern about explosion when an electrochemical device is overheated to cause thermal runaway or perforation of a separator. Particularly, a polyolefin-based porous substrate used conventionally as a separator for an electrochemical device shows a severe heat shrinking behavior at a temperature of 100°C or higher due to its material property and a characteristic during its manufacturing process, including orientation, thereby causing a short-circuit between a positive electrode and a negative electrode.

To solve the above-mentioned safety problems of an electrochemical device, there has been suggested a separator having a porous coating layer formed by coating a mixture of inorganic particles with a binder polymer onto at least one surface of a porous polymer substrate having a plurality of pores.

Meanwhile, when the porous coating layer is coated on a porous polymer substrate, the distribution of the binder polymer in the porous coating layer varies depending on the humidified condition. If the binder polymer is distributed at the interface of the porous coating layer, the adhesion force with the electrode increases, but this gives an adverse effect on the cell performance.

In terms of process, it is advantageous if the adhesion force with the electrode is strong, but in terms of performance, the stronger the adhesion force with the electrode, the lower the performance.

Therefore, in the present disclosure, it is intended to provide a lithium secondary battery with improved battery performance while maintaining the adhesion force with the electrode.

### DISCLOSURE

### Technical Problem

In an aspect, the present disclosure is directed to providing a lithium secondary battery, which includes a porous coating layer to have improved heat resistance, excellent adhesion force with an electrode, improved performance, specifically in terms of ionic conductivity, and reduced resistance.

In another aspect, the present disclosure is directed to providing a manufacturing method thereof.

### Technical Solution

In one aspect of the present disclosure, there is provided a method of manufacturing a lithium secondary battery according to the following embodiments.

The first embodiment is directed to a method of manufacturing a lithium secondary battery, comprising:
(S1) preparing a porous coating layer forming slurry, which contains inorganic particles, a fluorine-based binder polymer and an organic solvent;
(S2) making a preliminary separator by coating the porous coating layer forming slurry on at least one surface of a polyolefin-based porous polymer substrate and drying the same under a humidified condition;
(S3) putting an electrode assembly, in which the preliminary separator is interposed between a positive electrode and a negative electrode, into a battery case and injecting an electrolytic solution therein; and
(S4) aging and activating the electrode assembly into which the electrolytic solution is injected,
wherein a step of thermally treating the battery case is provided between the (S3) step and the (S4) step or after the (S4) step.

The (S2) step may be performed under 40 to 80% relative humidity.

In the thermally treating step, the battery case may be maintained at a temperature of 80°C or higher for 1 or more hours.

In the thermally treating step, the battery case may be maintained at a temperature of 80°C or above for 3 to 6 hours.

In the aging step, the electrode assembly may be stored for a predetermined time. At this time, in the aging step, the electrode assembly may be stored at 20°C to 40°C for 1 to 48 hours.

In the thermally treating step, the fluorine-based binder polymer in a lump state may be dissolved in the injected electrolytic solution to form a separator in which a pore channel is formed. At this time, the separator may have an ionic conductivity of 9.0 × 10⁻⁴ S/cm to 1.0 × 10⁻⁴ S/cm.

The thermally treating step may be performed before or after degassing.

The porous coating layer may include interstitial volume that is a space defined by the inorganic particles substantially in contact with each other,
the porous coating layer may include macro pores that are formed as the fluorine-based binder polymer is dissolved in the electrolytic solution, and
the interstitial volume and the macro pores may exist together. At this time, an average diameter of the macro pores may be 1 to 5 times larger than that of the interstitial volume.

In another aspect of the present disclosure, there is provided a separator for a lithium secondary battery.

The fifth embodiment is directed to a separator for a lithium secondary battery, which includes:
a porous polymer substrate and a porous coating layer formed on at least one surface of the porous polymer substrate,
wherein the porous coating layer contains inorganic particles and a fluorine-based binder polymer,
the porous coating layer includes interstitial volume that is a space defined by the inorganic particles substantially in contact with each other,
the porous coating layer simultaneously includes macro pores larger than the interstitial volume,
the interstitial volume and the macro pores exist together in the porous coating layer, and
the separator has an ionic conductivity of 9.0 × 10⁻⁴ S/cm to 1.0 × 10⁻⁴ S/cm.

The macro pores may be formed as the fluorine-based binder polymer is dissolved in the electrolytic solution.

In another aspect of the present disclosure, there is provided a lithium secondary battery according to the following embodiment.

Specifically, there is provided a lithium secondary battery, which includes a positive electrode, a negative electrode and a separator interposed between the positive electrode and the negative electrode,
wherein the separator is the separator as described above.

### Advantageous Effects

In an aspect of the present disclosure, it is possible to provide a lithium secondary battery, which includes a porous coating layer to have improved heat resistance, excellent adhesion force with an electrode, improved performance, specifically in terms of ionic conductivity, and reduced resistance.

In another aspect, is possible to provide a manufacturing method thereof.

### DESCRIPTION OF DRAWINGS

FIGS. 1a and 1b are flowcharts for schematically illustrating a method of manufacturing a lithium secondary battery according to an embodiment of the present disclosure.
FIG. 2 is a diagram schematically showing the method of manufacturing a lithium secondary battery according to an embodiment of the present disclosure.
FIGS. 3 and 4 are SEM photographs showing a surface of a separator according to an embodiment of the present disclosure.
FIG. 5 is a graph showing ionic conductivity of separators according to examples of the present disclosure and comparative examples.
FIG. 6 is a graph showing concentration polarization improvement effect according to Example 1 of the present disclosure and Comparative Example 1.
FIGS. 7 and 8 are graphs showing a capacity of a lithium secondary battery according to a thermal treatment temperature and/or a thermal treatment time.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

As used herein, the expression 'one portion is connected to another portion' covers not only 'a portion is directly connected to another portion' but also 'one portion is connected indirectly to another portion' by way of the other element interposed between them. In addition, 'connection' covers electrochemical connection as well as physical connection.

Throughout the specification, the expression 'a part includes an element' does not preclude the presence of any additional elements but means that the part may further include the other elements.

In addition, it will be understood that the terms "comprises" and/or "comprising", or "includes" and/or "including" when used in this specification, refer to the presence of any stated shapes, numbers, steps, operations, members, elements and/or groups thereof, but do not preclude the addition of one or more other shapes, numbers, steps, operations, members, elements and/or groups thereof.

As used herein, the terms 'approximately', 'substantially', or the like, are used as meaning contiguous from or to the stated numerical value, when an acceptable preparation and material error unique to the stated meaning is suggested, and are used for the purpose of preventing an unconscientious invader from unduly using the stated disclosure including an accurate or absolute numerical value provided to help understanding of the present disclosure.

As used herein, the term 'combination thereof' included in any Markush-type expression means a combination or mixture of one or more elements selected from the group of elements disclosed in the Markush-type expression, and refers to the presence of one or more elements selected from the group.

As used herein, the expression 'A and/or B' means 'A, B or both of them'.

Hereinafter, the present disclosure will be described in detail.

In an electrochemical device such as a lithium secondary battery, a separator typically uses a porous polymer substrate, so there is a problem in that the separator shows heat shrinkage behavior. Accordingly, in order to lower the thermal shrinkage rate of the separator, a porous coating layer is introduced thereto.

When the porous coating layer is coated on a porous polymer substrate, the distribution of a binder polymer in the porous coating layer varies depending on a humidified condition. If the binder polymer is distributed at an interface of the porous coating layer, the adhesion force with an electrode increases, but this has an adverse effect on the cell performance.

In terms of process, it is advantageous if the adhesion force with the electrode is strong, but in terms of performance, the stronger the adhesion force with the electrode, the lower the performance.

Therefore, in the present disclosure, it is intended to provide a lithium secondary battery with improved battery performance while maintaining the adhesion force with the electrode.

Specifically, the inventors have found a problem in which a fluorine-based binder polymer is lumped due to heat/pressure during a lamination step where a binder polymer in the porous coating layer is interposed between a positive electrode and a negative electrode, and have attempted to use this phenomenon. In other words, a process of dissolving the lumped binder polymer by heat/pressure so that the space created by dissolving the binder polymer serves as a lithium ion transfer path has been studied.

Accordingly, one aspect of the present disclosure is directed to a lithium secondary battery including a separator, in which large pores formed by thermal treatment and small pores formed by humidification phase separation exist together in the porous coating layer so that the large pores increase ionic conductivity and decrease resistance.

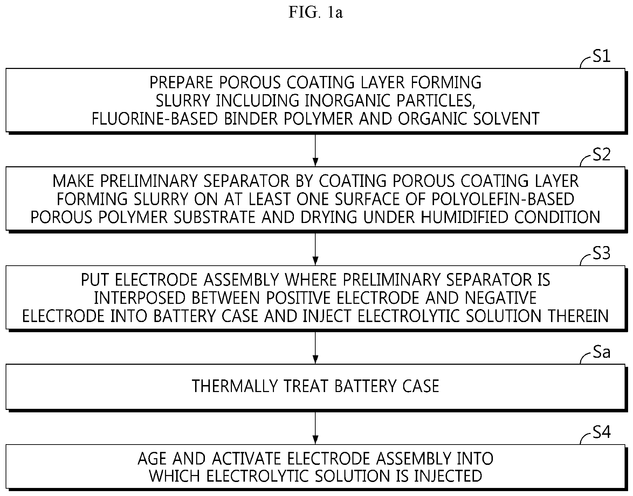

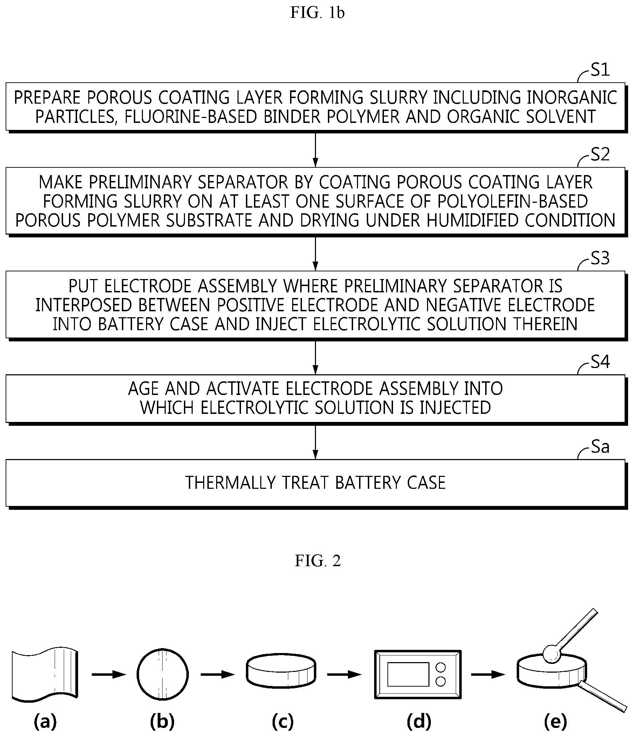

Hereinafter, the present disclosure will be described with reference to FIGS. 1a and 1b.

Accordingly, a method of manufacturing a lithium secondary battery according to an aspect of the present disclosure includes:
(S1) preparing a porous coating layer forming slurry, which contains inorganic particles, a fluorine-based binder polymer and an organic solvent;
(S2) making a preliminary separator by coating the porous coating layer forming slurry on at least one surface of a polyolefin-based porous polymer substrate under a humidified condition and drying the same;
(S3) putting an electrode assembly, in which the preliminary separator is interposed between a positive electrode and a negative electrode, into a battery case and injecting an electrolytic solution therein; and
(S4) aging and activating the electrode assembly into which the electrolytic solution is injected,
wherein a thermally treating step (Sa) of thermally treating the battery case is provided between the (S3) step and the (S4) step or after the (S4) step.

In the present disclosure, the thermally treating step (Sa) differs from the existing aging step in its operation mechanism and effects.

Specifically, in the existing aging step, a certain temperature and humidity should be maintained for electrolytic solution wetting. In the aging step, after a certain period, side reactions such as internal corrosion of the battery may occur, so it should be careful to set the period. Also, temperature and humidity conditions affect the battery characteristics and thus should be carefully set.

However, in the thermally treating step of the present disclosure, the fluorine-based binder polymer lumped due to heat/pressure in a lamination step where the separator is interposed between the positive electrode and the negative electrode is dissolved by the electrolytic solution injected into the electrode assembly. Accordingly, the phase of the fluorine-based binder polymer changes from solid to liquid, and large pores may be formed in the place where the fluorine-based binder polymer is lumped.

In other words, in the present disclosure, a step of dissolving the binder polymer in the injected electrolytic solution is additionally included, separate from the aging step.

Meanwhile, the inventors have found that the increase in ionic conductivity of the separator due to the thermal treatment is particularly active under humidified conditions.

It seems that this is because the fluorine-based binder polymer may be mainly located at the surface of the porous coating layer as a humidification step is maintained at high relative humidity, specifically 40 to 80% relative humidity, and as a result, the fluorine-based binder polymer may easily react with the electrolytic solution and thus easily receive the heat by the thermal treatment.

Hereinafter, the above step will be described in detail.

The (S1) step is a step of preparing a porous coating layer forming slurry, which contains inorganic particles, a fluorine-based binder polymer and an organic solvent.

### [Inorganic particles]

The inorganic particles are not particularly limited as long as they are electrochemically stable. That is, the inorganic particles useable in the present disclosure are not particularly limited as long as an oxidation and/or reduction reaction does not occur in an operating voltage range (e.g., 0V to 5V based on Li/Li⁺) of an electrochemical device to which the present disclosure is applied. In particular, if inorganic particles having high dielectric permittivity are used, the ionic conductivity of the electrolytic solution may be improved since the high dielectric permittivity contributes to an increase in the degree of dissociation of electrolyte salts, such as lithium salts, in the liquid electrolyte.

For the above reasons, the inorganic particles may be inorganic particles having a dielectric constant of 5 or above, inorganic particles having a lithium ion transfer ability, or mixtures thereof.

The inorganic particles having a dielectric constant of 5 or above may be any one selected from the group consisting of Al(OH)₃, Al₂O₃, SiO₂, ZrO₂, AIO(OH), TiO₂, BaTiO₃, Pb(ZrₓTi₁₋ₓ)O₃ (PZT, here, 0 < x < 1), Pb₁₋ₓLaₓZr_{1-y}Ti_{y}O₃ (PLZT, here, 0 < x < 1, 0 < y < 1), (1-x)Pb(Mg_{1/3}Nb_{2/3})O₃-xPbTiO₃ (PMN-PT, here, 0 < x < 1), hafnia (HfO₂), SrTiO₃, SnO₂, CeO₂, MgO, NiO, CaO, ZnO, ZO₃ and SiC, or a mixture thereof.

The inorganic particles having a lithium ion transfer ability may be any one selected from the group consisting of lithium phosphate (Li₃PO₄), lithium titanium phosphate (LiₓTi_{y}(PO₄)₃, 0 < x < 2, 0 < y < 3), lithium aluminum titanium phosphate (LiₓAl_{y}Ti_{z}(PO₄)₃, 0 < x < 2, 0 < y < 1, 0 < z < 3), (LiAlTiP)ₓO_{y} series glass (0 < x < 4, 0 < y < 13), lithium lanthanum titanate (LiₓLa_{y}TiO₃, 0 < x < 2, 0 < y < 3), lithium germanium thiophosphate (LiₓGe_{y}P_{z}S_{w}, 0 < x < 4, 0 < y < 1, 0 < z < 1, 0 < w < 5), lithium nitride (LiₓN_{y}, 0 < x <4, 0 < y < 2), SiS₂ series glass (LiₓSi_{y}S_{z}, 0 < x < 3, 0 < y < 2, 0 < z < 4) and P₂S₅ series glass (LiₓP_{y}S_{z}, 0 < x < 3, 0 < y < 3, 0 < z < 7), a mixture thereof.

The average particle diameter of the inorganic particles is not particularly limited, but in order to form a porous coating layer of uniform thickness and appropriate porosity, it is preferably in the range of 0.001 to 10 µm, more preferably 1 to 700 nm, even more preferably 20 to 500 nm.

### [Binder polymer]

The binder polymer used to form the porous coating layer includes a fluorine-based binder polymer. The fluorine-based binder polymer is electrochemically stable and has excellent oxidation resistance. The fluorine-based binder polymer is easy to form pores by humidification phase separation, and at the same time, it is advantageous in improving the adhesion force between the electrode and the porous coating layer since it has an adhesion force.

In a specific embodiment of the present disclosure, the fluorine-based polymer include any one of a polyvinylidene fluoride-hexafluoropropylene copolymer, a polyvinylidene fluoride-trifluoroethylene copolymer, a polyvinylidene fluoridechlorotrifluoroethylene copolymer, a polyvinylidene fluoride-tetrafluoroethylene copolymer, or at least two of them.

Among them, the polyvinylidene fluoride-hexafluoropropylene copolymer is preferable since it is advantageous in forming pores due to humidification phase separation.

In a specific embodiment of the present disclosure, the lower limit of the weight-average molecular weight of the fluorine-based binder polymer may be 200,000 or more, or 300,000 or more, or 400,000 or more, or 500,000 or more. The upper limit of the weight-average molecular weight of the fluorine-based binder polymer may be 1,000,000 or less, or 900,000 or less, or 800,000 or less. For example, the weight-average molecular weight of the fluorine-based binder polymer may be 250,000 to 800,000 in terms of securing heat resistance and adhesion while securing process efficiency.

The binder polymer used for forming the porous coating layer may further include a polymer that is commonly used for forming a porous coating layer in the art. In particular, the binder polymer may use a polymer having a glass transition temperature (Tg) of -200 to 200°C because such a polymer can improve the mechanical properties, such as flexibility and elasticity, of the finally formed porous coating layer. Such a binder polymer serves as a binder which connects and stably fixes the inorganic particles with one another, and thus contributes to prevention of degradation of mechanical properties of the separator to which the porous coating layer is introduced.

In addition, it is not essentially required for the binder polymer to have ionic conductivity. However, when using a polymer having ionic conductivity, it is possible to further improve the performance of an electrochemical device. Therefore, a binder polymer having a dielectric constant as high as possible may be used. In fact, since the dissociation degree of a salt in an electrolytic solution depends on the dielectric constant of the solvent for the electrolytic solution, a binder polymer having a higher dielectric constant can improve the salt dissociation degree in an electrolyte. The binder polymer may have a dielectric constant ranging from 1.0 to 100 (measured at a frequency of 1 kHz), particularly 10 or more.

In addition to the above-mentioned function, the binder polymer may be characterized in that it is gelled upon the impregnation with a liquid electrolytic solution and thus shows a high degree of swelling. Thus, the binder polymer has a solubility parameter (i.e., Hildebrand solubility parameter) of 15 to 45 MPa^{1/2} or 15 to 25 MPa^{1/2} and 30 to 45 MPa^{1/2}. Therefore, hydrophilic polymers having many polar groups may be used more frequently as compared to hydrophobic polymers, such as polyolefins. When the solubility parameter is less than 15 MPa^{1/2} and more than 45 MPa^{1/2}, it is difficult for the binder polymer to be swelled with a conventional liquid electrolytic solution for a battery.

The binder polymer may include, but is not limited to: polymethyl methacrylate, polyetylexyl acrylate, polybutyl acrylate, polyacrylonitrile, polyvinyl pyrrolidone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethylpolyvinylalchol, cyanoethyl cellulose, cyanoethyl sucrose, pullulan and carboxymethyl cellulose.

At this time, the weight-average molecular weight may be measured using gel permeation chromatography (GPC, PL GPC220, Agilent Technologies).

Specifically, the weight-average molecular weight may be measured under the following analysis conditions:
- Column: PL MiniMixed B × 2
- Solvent: THF
- Flow rate: 0.3 ml/min
- Sample concentration: 2.0 mg/ml
- Injection volume: 10 µl
- Column temperature: 40°C
- Detector: Agilent RI detector
- Standard: Polystyrene (corrected by 3rd order function)
- Data processing: ChemStation

The weight ratio of the inorganic particles and the total binder polymer is, for example, 50:50 to 99:1, specifically 70:30 to 95:5. If the content ratio of the inorganic particles to the binder polymer satisfies the above range, the problem of reducing the pore size and porosity of the porous coating layer caused by an excessive content of the binder polymer may be prevented, and also the problem of weakening the peeling resistance of the formed porous coating layer caused by a deficient content of the binder polymer may also be solved.

The porous coating layer forming slurry according to an embodiment of the present disclosure may further include other additives in addition to the inorganic particles and the polymer described above, as components of the porous coating layer.

Meanwhile, in a specific embodiment of the present disclosure, the content of the fluorine-based binder polymer may be 80 weight% or more, 85 weight% or more, 95 weight% or more, or 100 weight% based on 100 weight% of the total content of the binder polymer.

### [Organic solvent]

The organic solvent has a solubility index similar to that of the binder polymer to be used, and preferably has a low boiling point. This is to facilitate uniform mixing and subsequent solvent removal. The solvent useable in the present disclosure may be one kind of compound selected from acetone, tetrahydrofuran, methylene chloride, chloroform, dimethyl formamide, N-methyl-2-pyrrolidone, methyl ethyl ketone and cyclohexane, or a mixture thereof, without being limited thereto.

After that, the prepared porous coating layer forming slurry is coated on at least one surface of a polyolefin-based porous polymer substrate and dried to make a preliminary separator (S2). The coating and drying step is carried out under humidified conditions.

The method of coating the porous polymer substrate with the porous coating layer forming slurry is not particularly limited, but it is preferable to use slot coating or dip coating. In the slot coating, the slurry supplied through a slot die is applied to the entire surface of a substrate, and the thickness of the coating layer may be adjusted according to a flow rate of the slurry supplied from a metering pump. In addition, the dip coating is a coating method by immersing a substrate in a tank containing the slurry, and the thickness of the coating layer may be adjusted according to a concentration of the slurry and the speed of removing the substrate from the slurry tank. Also, for more accurate control of the coating thickness, the thickness may be post-weighed through a Mayer bar or the like after immersion.

Meanwhile, in a specific embodiment of the present disclosure, the coating step may be performed in a relative humidity condition of 40 to 80% relative humidity. Specifically, the relative humidity may be 40% or more, 43% or more, 45% or more, 50% or more, 57% or more within the above numerical range, and may be 80% or less, 75% or less, or 70% or less within the above numerical range. Accordingly, it is possible to control the lumping of the binder polymer and the lumping position thereof. Specifically, the binder polymer in the porous coating layer may be rearranged near the surface of the porous coating layer. Meanwhile, in a specific embodiment of the present disclosure, in the absence of the humidified condition process, the corresponding binder polymers are uniformly distributed inside the porous coating layer. In other words, an adhesive layer required for adhesion to the electrode cannot be formed on the surface of the porous coating layer, which may cause an adhesion force defect even though a lamination process is performed.

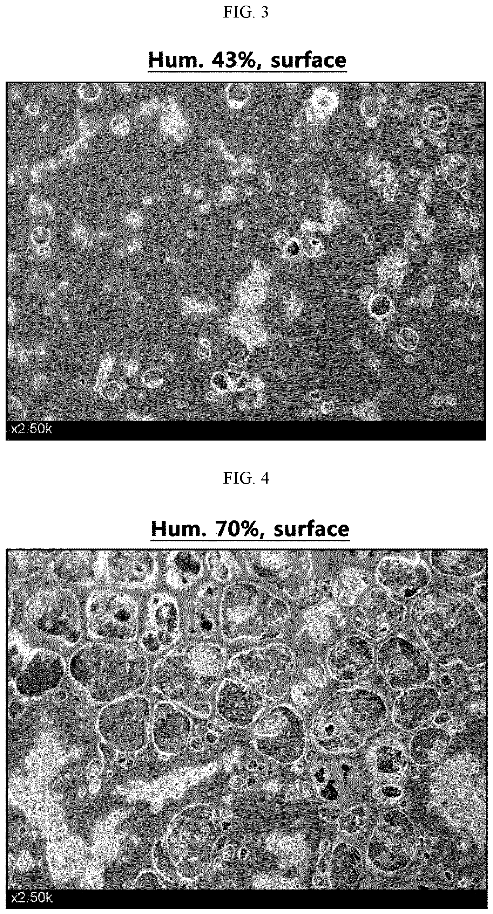

Meanwhile, the inventors have found that the higher the relative humidity, the higher the ionic conductivity of the separator. This is shown in FIGS. 3 to 5. As the relative humidity increases, the ionic conductivity of the separator is increased because the binder polymer, which acts as a resistance, moves to the surface of the porous coating layer, thereby reducing the factors that hinder the movement of lithium ions.

The porous polymer substrate coated with the porous coating layer forming slurry is dried using a dryer such as an oven to form a porous coating layer formed on at least one surface of the porous polymer substrate.

At this time, the drying step may be performed in a 40°C to 70°C condition. Accordingly, the position of the rearranged binder polymer according to humidification may be fixed.

### [Porous polymer substrate]

The porous polymer substrate may be specifically a porous polymer film substrate or a porous polymer non-woven substrate.

The porous polymer film substrate may be a porous polymer film made of polyolefin such as polyethylene or polypropylene, and the polyolefin porous polymer film substrate exhibits a shutdown function at a temperature of, for example, 80°C to 150°C.

At this time, the polyolefin porous polymer film may be made of any one polyolefin-based polymer selected from polyethylene such as high-density polyethylene, linear low-density polyethylene, low-density polyethylene and ultra-high molecular weight polyethylene, polypropylene, polybutylene, polypentene, and the like, or a mixture thereof.

In addition, the porous polymer film substrate may be made by molding various polymers such as polyester in addition to polyolefin into a film shape. In addition, the porous polymer film substrate may be formed in a structure in which two or more film layers are laminated, and each film layer may be made of any one polymer such as polyolefin and polyester described above, or a mixture thereof.

In addition, the porous polymer film substrate and the porous non-woven substrate may be made of any one polymer selected from polyethylene terephthalate, polybutylene terephthalate, polyester, polyacetal, polyamide, polycarbonate, polyimide, polyetheretherketone, polyethersulfone, polyphenyleneoxide, polyphenylenesulfide, polyethylenenaphthalene, and the like, a mixture thereof, in addition to the polyolefin-based described above.

The thickness of the porous polymer substrate is not particularly limited, but is specifically 1 to 100 µm, more specifically 5 to 50 µm, and the pore size and porosity of the porous polymer substrate are also not particularly limited, but each are preferably 0.01 to 50 µm and 20 to 75%, respectively.

In the porous coating layer, inorganic particles are charged and bound to each other by the binder polymer in a state where the inorganic particles are in contact with each other. In this case, an interstitial volume may be formed among the inorganic particles, and the interstitial volume among the inorganic particles may become an empty space to form a pore.

That is, the binder polymer may attach the inorganic particles to each other, for example, allow the inorganic particles to be connected and fixed to each other, so that the inorganic particles keep bound to each other. In addition, the pores of the porous coating layer are formed as the interstitial volume among the inorganic particles becomes an empty space, and this space may be defined by the inorganic particles that are substantially in surface contact with each other in a closely packed or densely packed structure by the inorganic particles.

In a specific embodiment of the present disclosure, the porous coating layer includes an interstitial volume, which is a space defined by the inorganic particles that are substantially in contact with each other, and pores having a diameter 1 to 5 times larger than the average diameter of the interstitial volume may exist together. In other words, the porous coating layer includes a plurality of pores having a significantly larger diameter than the interstitial volume.

Next, the electrode assembly in which the preliminary separator is interposed between the positive electrode and the negative electrode is put into the battery case, and an electrolytic solution is injected therein (S3).

The electrolytic solution is a salt having a structure of A⁺B⁻, wherein A⁺ includes an alkali metal cation such as Li⁺, Na⁺, K⁺ or a combination thereof, and B⁻ includes an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻ or a combination thereof, the salt being dissolved or dissociated in an organic solvent including propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone (γ-butyrolactone) or a combination thereof. However, the present disclosure is not limited thereto.

However, the electrolytic solution may be injected in an adequate step during the process for manufacturing a battery depending on the manufacturing process of a final product and properties required for a final product. In other words, the electrolytic solution may be injected before the assemblage of a battery or in the final step of the assemblage of a battery. However, the electrolytic solution is injected before the thermally treating step, explained later.

After that, a step of aging and activating the electrode assembly into which the electrolytic solution is injected is performed (S4).

At this time, the activating step includes an aging step. The aging step is a step of storing the electrode assembly for a predetermined time, and its purpose and mechanism are different from those of a thermally treating step, explained later.

Specifically, the aging step is to optimize the movement of ions by sufficiently dispersing the electrolytic solution inside the battery. For this, the aging step is a step of storing the battery for a certain period of time under a specified temperature and humidity condition. The wetting of the battery may be increased through the aging process. The aging process may have different time or temperature depending on the purpose of use, the specification of a final product, and the configuration of the battery cell. In a specific embodiment of the present disclosure, the aging time may be 1 to 3 days.

Meanwhile, the thermally treating step of the present disclosure is a step of deforming the fluorine-based binder polymer by heat in the porous coating layer and dissolving the deformed fluorine-based binder polymer in the injected electrolytic solution.

In a specific embodiment of the present disclosure, the step of activating the secondary battery may include an initial charging step and a high-temperature aging step, or may include an initial charging step and a room-temperature aging step.

The initial charging may be performed in a state where the SOC (State Of Charge) is 10% or more, 30% or more, or 50% or more, and the upper limit of the SOC is not particularly limited, but may be 100% or 90%. In addition, the initial charging may have an end voltage of 2.5 V or higher, 3 V or higher, or 3.5 V or higher, and may be 4.5 V or lower or 4 V or lower within the above numerical range.

The C-rate at the time of the initial charging may be 0.05C or more, 0.1 C or more, or 0.33 C or more, and may be 4.8C or less, or 3.65C or less.

In addition, the room-temperature aging step is a step that may be additionally included between the initial charging step and the high-temperature aging step, and may be carried out at a temperature of 20°C to 40°C, 23°C to 35°C, 23°C to 30°C, 23°C to 27°C, or 23°C to 25°C. At this time, the room-temperature aging step may be performed for 1 to 7 days, or 1 to 5 days.

According to an embodiment of the present disclosure, the step of activating the secondary battery may proceed as a step of charging with SOC 30% up to 3.65 V under 0.1C CC condition and aging by storage at room temperature for 3 days.

In the method of manufacturing a lithium secondary battery according to an embodiment of the present disclosure, the battery case is thermally treated between the (S3) step and the (S4) step, or after the (S4) step (Sa).

In the electrode assembly into which the electrolytic solution is injected as above, the preliminary separator inside the electrode assembly reacts with the electrolytic solution, and if thermal treatment is applied thereto later, the lumped binder polymer is dissolved to form large pores.

Accordingly, 50% or more of the pores formed in the porous coating layer have a pore size of 0.005 to 50 µm.

In a specific embodiment of the present disclosure, the thermally treating step may be performed at a temperature of 80°C or higher. More specifically, the thermally treating step may be performed at a temperature of 75°C or higher, 80°C or higher, or 85°C or higher, and may be performed at a temperature of 100°C or lower, 95°C or lower, or 90°C or lower.

In addition, the thermally treating step may be carried out for more than 1 hour. More specifically, the thermally treating step may be performed for 1 hour or more, 2 hours or more, or 3 hours or more, and may be performed for 10 hours or less, 8 hours or less, or 6 hours or less.

In a specific embodiment of the present disclosure, the thermally treating step may be performed before degassing or after degassing.

In another embodiment of the present disclosure, there is provided a separator manufactured according to the above manufacturing method.

Specifically, the separator for a lithium secondary battery includes:
a porous polymer substrate and a porous coating layer formed on at least one surface of the porous polymer substrate,
wherein the porous coating layer contains inorganic particles and a fluorine-based binder polymer,
the porous coating layer includes interstitial volume that is a space defined by the inorganic particles substantially in contact with each other,
the porous coating layer simultaneously includes macro pores larger than the interstitial volume,
the interstitial volume and the macro pores exist together in the porous coating layer, and
the separator has an ionic conductivity of 9.0 × 10⁻⁴ S/cm to 1.0 × 10⁻⁴ S/cm.

The average diameter of the macro pores may be 1 to 5 times larger than the interstitial volume.

The macro pores may be formed as the fluorine-based binder polymer is dissolved in the electrolytic solution.

An electrochemical device according to an embodiment of the present disclosure includes a positive electrode, a negative electrode, and a separator interposed between the positive electrode and the negative electrode, and the separator is a separator according to an embodiment of the present disclosure described above.

The electrochemical device includes any device which carries out electrochemical reaction, and particular examples thereof include all types of primary batteries, secondary batteries, fuel cells, solar cells or capacitors, such as super capacitor devices. Particularly, among the secondary batteries, lithium secondary batteries, including lithium metal secondary batteries, lithium ion secondary batteries, lithium polymer secondary batteries or lithium ion polymer batteries, are preferred.

The positive electrode and the negative electrode to be applied together with the separator of the present disclosure are not particularly limited, and may be manufactured such that an electrode active material is bound to an electrode current collector according to a common method known in the art. As a non-limiting example of the positive electrode active material among the electrode active materials, common positive electrode active materials useable for a positive electrode of a conventional electrochemical device may be used. In particular, lithium manganese oxide, lithium cobalt oxide, lithium nickel oxide, lithium iron oxide, or a lithium composite oxide thereof may be preferably used. As a non-limiting example of the negative electrode active material, common negative electrode active materials useable for a negative electrode of a conventional electrochemical device may be used. In particular, lithium adsorption materials such as lithium metal, lithium alloy, carbon, petroleum coke, activated carbon, graphite, or other carbons may be preferably used. As a non-limiting examples of the positive electrode current collector, a foil made of aluminum, nickel, or a combination thereof may be used, and as a non-limiting example of the negative electrode current collector, a foil made of copper, gold, nickel, copper alloy, or a combination thereof may be used.

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

### Example 1

### [Preparation of a preliminary separator]

A porous coating layer forming slurry was prepared by putting aluminum hydroxide (Al(OH)₃) serving as inorganic particles and PVDF-HFP (Solvay, Solef 21510) serving as a fluorine-based binder polymer in an acetone solvent at a weight ratio of 30:70.

The porous coating layer forming slurry was dip-coated on both surfaces of a 9 µm-thick polyethylene porous polymer substrate (porosity: 43%, ventilation time: 110 sec, resistance: 0.45 ohm), and dried at 23°C and 43% relative humidity, thereby preparing a preliminary separator on which a porous coating layer is formed.

### [Manufacture of a lithium secondary battery]

96.7 parts by weight of Li[Ni_{0.6}Mn_{0.2}Co_{0.2}]O₂ serving as a positive electrode active material, 1.3 parts by weight of graphite serving as a conductive material and 2.0 parts by weight of polyvinylidene fluoride (PVdF) serving as a binder were mixed to prepare a positive electrode mixture. The resultant positive electrode mixture was dispersed in N-methyl-2-pyrrolidone serving as a solvent to prepare a positive electrode slurry. The slurry was coated on both surfaces of an aluminum foil having a thickness of 20 µm, followed by drying and pressing, to obtain a positive electrode.

97.6 parts by weight of artificial graphite and natural graphite (a weight ratio: 90:10) serving as a negative electrode active material was mixed with 1.2 parts by weight of styrene-butadiene rubber (SBR) and 1.2 parts by weight of carboxymethyl cellulose (CMC) serving as binders to obtain a negative electrode mixture. The negative electrode mixture was dispersed in ion exchange water serving as a solvent to prepare a negative electrode slurry. The slurry was coated on both surfaces of a copper foil having a thickness of 20 µm, followed by drying and pressing, to obtain a negative electrode.

LiPF₆ was dissolved in an organic solvent containing a mixture of ethylene carbonate (EC), propylene carbonate (PC) and diethyl carbonate (DEC) at a volume ratio of 3:3:4 to a concentration of 1.0M to prepare an electrolytic solution.

The positive electrode and the negative electrode prepared as above were laminated with the preliminary separator being interposed therebetween, so that at least one of the active material layers of the positive electrode and the negative electrode was interposed in surface contact with the porous coating layer of the preliminary separator, thereby manufacturing an electrode assembly. In the interposing step, the fluorine-based binder polymer is lumped by heat or pressure in the preliminary separator.

After the electrode assembly was received in a pouch, the electrolytic solution was injected therein, thereby manufacturing a secondary battery.

After that, the electrode assembly was thermally treated at 80°C for 3 hours. After the fluorine-based binder polymer lumped in the interposing step was deformed during the thermal treatment, the fluorine-based binder polymer was dissolved by the injected electrolytic solution to form macro pores.

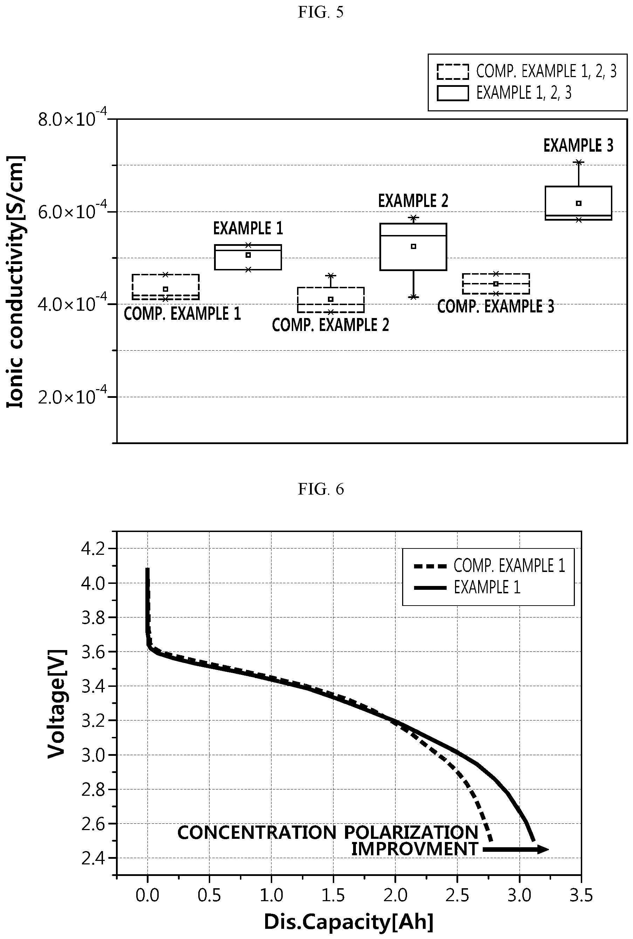

Next, the secondary battery was charged with SOC 30% up to 3.65 V under 0.1C CC condition, and stored at room temperature of 25°C for 3 days, followed by an activating process for aging. The results are shown in Table 1 and FIG. 5.

### Examples 2 and 3

A lithium secondary battery was manufactured in the same manner as in Example 1, except that the humidified condition was controlled to 57% and 70%, respectively, when manufacturing the porous coating layer. The results are shown in Table 1 and FIG. 5. In addition, the results according to Example 3 are shown in FIG. 4.

### Comparative Example 1

A separator was manufactured in the same manner as in Example 1, except that the thermal treatment process was not performed.

Specifically, a lithium secondary battery was manufactured as follows.

### [Manufacture of a lithium secondary battery]

96.7 parts by weight of Li[Ni_{0.6}Mn_{0.2}Co_{0.2}]O₂ serving as a positive electrode active material, 1.3 parts by weight of graphite serving as a conductive material and 2.0 parts by weight of polyvinylidene fluoride (PVdF) serving as a binder were mixed to prepare a positive electrode mixture. The resultant positive electrode mixture was dispersed in N-methyl-2-pyrrolidone serving as a solvent to prepare a positive electrode slurry. The slurry was coated on both surfaces of an aluminum foil having a thickness of 20 µm, followed by drying and pressing, to obtain a positive electrode.

97.6 parts by weight of artificial graphite and natural graphite (a weight ratio: 90:10) serving as a negative electrode active material was mixed with 1.2 parts by weight of styrene-butadiene rubber (SBR) and 1.2 parts by weight of carboxymethyl cellulose (CMC) serving as binders to obtain a negative electrode mixture. The negative electrode mixture was dispersed in ion exchange water serving as a solvent to prepare a negative electrode slurry. The slurry was coated on both surfaces of a copper foil having a thickness of 20 µm, followed by drying and pressing, to obtain a negative electrode.

LiPF₆ was dissolved in an organic solvent containing a mixture of ethylene carbonate (EC), propylene carbonate (PC) and diethyl carbonate (DEC) at a volume ratio of 3:3:4 to a concentration of 1.0M to prepare a non-aqueous electrolytic solution.

The positive electrode and the negative electrode prepared as above were laminated with the preliminary separator of Example 1 being interposed therebetween, so that at least one of the active material layers of the positive electrode and the negative electrode was interposed in surface contact with the porous coating layer of the preliminary separator, thereby manufacturing an electrode assembly.

After the electrode assembly was received in a pouch, the electrolytic solution was injected therein, thereby manufacturing a secondary battery.

Next, the secondary battery was charged with SOC 30% up to 3.65 V under 0.1C CC condition, and stored at room temperature of 25°C for 3 days, followed by an activating process for aging.

The results are shown in Table 1 and FIG. 5 and FIGS. 6 to 8.

### Comparative Examples 2 and 3

When manufacturing the preliminary separator, a lithium secondary battery was manufactured in the same manner as in Example 1, except that the relative humidity was controlled to 57% and 70%, respectively, and the thermal treatment process was not performed. The results are shown in Table 1 and FIG. 5.

**Table 1**

| | humidified condition | thermal treatment | thermal treatment condition | | ionic conductivity of separator | resistance of separator (ohm) |
|---|---|---|---|---|---|---|
| | | | temperature (°C) | time (hr) | | |
| Example 1 | 43% | O | 80 | 3 | 5.17×10⁻⁴ | 1.23 |
| Example 2 | 57% | O | 80 | 3 | 5.24 ×10⁻⁴ | 1.21 |
| Example 3 | 70% | O | 80 | 3 | 6.18 ×10⁻⁴ | 1.03 |
| Comparative Example 1 | 43% | X | - | - | 4.32 ×10⁻⁴ | 1.47 |
| Comparative Example 2 | 57% | X | - | - | 4.10 ×10⁻⁴ | 1.55 |
| Comparative Example 3 | 70% | X | - | - | 4.43 ×10⁻⁴ | 1.44 |

Meanwhile, FIGS. 3 and 4 show the surfaces of the separators according to Examples 1 and 3, respectively. As shown in each figure, it may be found that several macro pores are formed in the separator in a 70% humidified condition.

### Examples 4 and 5

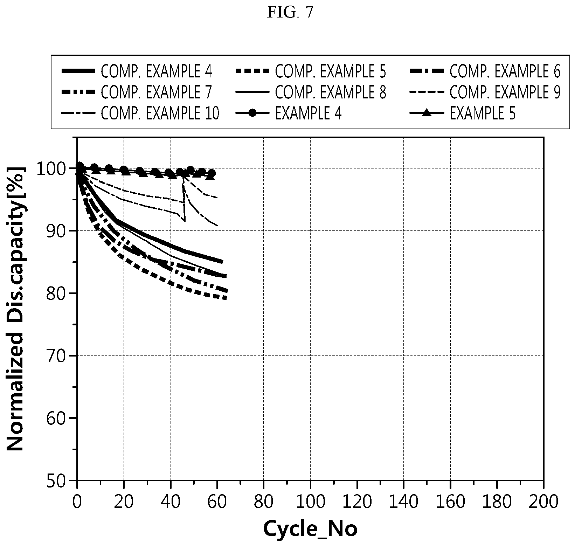

A lithium secondary battery was manufactured in the same manner as in Example 1, except that the thermal treatment conditions were as shown in Table 2, respectively, charging was performed in CC-CV mode from 2.5 V to the cut-off voltage at 0.33 C rate, and when the SOC (State Of Charge) reached 100%, discharging was performed until 3 V at 1 C-rate in a CC mode. The results are shown in Table 2 and FIG. 7.

### Comparative Examples 4 to 10

A lithium secondary battery was manufactured in the same manner as in Example 1, except that the thermal treatment conditions were as shown in Table 2, respectively, charging was performed in CC-CV mode from 2.5 V to the cut-off voltage at 0.33 C-rate, and when the SOC reached 100%, discharging was performed until 3 V at 1 C-rate in a CC mode. The results are shown in Table 2 and FIG. 7.

**Table 2**

| | humidified condition | thermal treatment | thermal treatment condition | | ionic conductivity of separator | capacity retention rate (at 60 cycle) | resistance of separator (ohm) |
|---|---|---|---|---|---|---|---|
| | | | temperature (°C) | time (hr) | | | |
| Example 4 | 43% | O | 80 | 1 | 5.17×10⁻⁴ | 98.72 | 1.23 |
| Example 5 | 43% | O | 80 | 6 | 5.19×10⁻⁴ | 98.17 | 1.22 |
| Comparative Example 4 | 43% | X | - | - | 4.59×10⁻⁴ | 85.24 | 1.38 |
| Comparative Example 5 | 43% | O | 60 | 1 | 4.80×10⁻⁴ | 79.46 | 1.32 |
| Comparative Example 6 | 43% | O | 60 | 6 | 4.81×10⁻⁴ | 82.89 | 1.32 |
| Comparative Example 7 | 43% | O | 60 | 24 | 4.80×10⁻⁴ | 80.90 | 1.32 |
| Comparative Example 8 | 43% | O | 70 | 1 | 4.82×10⁻⁴ | 82.83 | 1.32 |
| Comparative Example 9 | 43% | O | 70 | 6 | 5.09×10⁻⁴ | 94.75 | 1.25 |
| Comparative Example 10 | 43% | O | 70 | 24 | 5.10×10⁻⁴ | 90.68 | 1.24 |

### Examples 6 to 8

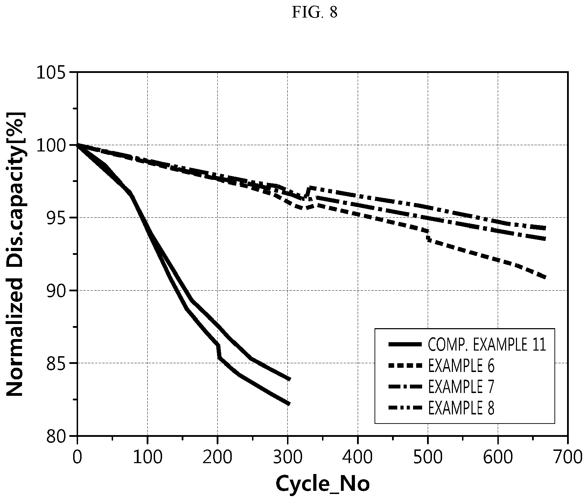

A lithium secondary battery was manufactured in the same manner as in Example 1, except that the thermal treatment conditions were as shown in Table 3, respectively, charging was performed in CC-CV mode from 2.5 V to the cut-off voltage at 0.33 C-rate, and when the SOC reached 100%, discharging was performed until 3 V at 0.33 C-rate in a CC mode. The results are shown in Table 3 and FIG. 8.

### Comparative Example 11

A lithium secondary battery was manufactured in the same manner as in Example 1, except that the thermal treatment was not performed, charging was performed in CC-CV mode from 2.5 V to the cut-off voltage at 0.33 C-rate, and when the SOC reached 100%, discharging was performed until 3 V at 0.33 C-rate in a CC mode. The results are shown in Table 3 and FIG. 8.

**Table 3**

| | humidified condition | thermal treatment | thermal treatment condition | | ionic conductivity | capacity retention | resistance of |
|---|---|---|---|---|---|---|---|
| | | | temperature (°C) | time (hr) | of separator | rate (at 300 cycle) | separator (ohm) |
| Comparative Example 11 | 43% | X | - | - | 4.59×10⁻⁴ | 82.96% | 1.38 |
| Example 6 | 43% | O | 80 | 1 | 5.17×10⁻⁴ | 96.03% | 1.23 |
| Example 7 | 43% | O | 80 | 3 | 5.18×10⁻⁴ | 96.58% | 1.23 |
| Example 8 | 43% | O | 80 | 6 | 5.19×10⁻⁴ | 96.69% | 1.22 |

### Experimental Example

### (1) Measurement of ionic conductivity of the separator

The separator obtained in each example and comparative example was punched out into a circular shape having a size of 1.7671 cm² and placed between two sheets of stainless steel to produce a coin cell. The electrochemical impedance was measured under conditions of amplitude of 10 mV and scan range of 500 khz to 0.1 mHz at room temperature using an analysis device (VMP3, Bio Logic Science Instrument), and ionic conductivity was calculated based thereon.

### (2) Method of measuring the capacity retention rate

For the cells of the examples and the comparative examples, the capacity retention rate was derived by calculating the ratio of the discharge capacity after 60 or 300 cycles to the first discharge capacity. The results are shown in Tables 2 to 3, respectively.

### (3) Method of measuring resistance

The resistance after aging after wetting the separators prepared in the examples and the comparative examples into an electrolytic solution was measured by an alternating current method at 25°C using a 1M LiPF₆-ethylene carbonate/ethylmethyl carbonate (weight ratio 3:7) electrolytic solution. Therefore, the resistance at this time is not obtained by measuring the resistance of the lithium secondary battery, but obtained by measuring the resistance of the separator itself.

## Claims

1. A method of manufacturing a lithium secondary battery, comprising:
(S1) preparing a porous coating layer forming slurry, which contains inorganic particles, a fluorine-based binder polymer and an organic solvent;
(S2) making a preliminary separator by coating the porous coating layer forming slurry on at least one surface of a polyolefin-based porous polymer substrate and drying the same under a humidified condition;
(S3) putting an electrode assembly, in which the preliminary separator is interposed between a positive electrode and a negative electrode, into a battery case and injecting an electrolytic solution therein; and
(S4) aging and activating the electrode assembly into which the electrolytic solution is injected,
wherein a step of thermally treating the battery case is provided between the (S3) step and the (S4) step or after the (S4) step.

2. The method of manufacturing a lithium secondary battery according to claim 1,
wherein the (S2) step is performed under 40 to 80% relative humidity.

3. The method of manufacturing a lithium secondary battery according to claim 1,
wherein in the thermally treating step, the battery case is maintained at a temperature of 80°C or higher for 1 or more hours.

4. The method of manufacturing a lithium secondary battery according to claim 1,
wherein in the thermally treating step, the battery case is maintained at a temperature of 80°C or higher for 3 to 6 hours.

5. The method of manufacturing a lithium secondary battery according to claim 1,
wherein in the aging step, the electrode assembly is stored for a predetermined time.

6. The method of manufacturing a lithium secondary battery according to claim 5,
wherein in the aging step, the electrode assembly is stored at 20°C to 40°C for 1 to 48 hours.

7. The method of manufacturing a lithium secondary battery according to claim 1,
wherein in the thermally treating step, the fluorine-based binder polymer in a lump state is dissolved in the injected electrolytic solution to form a separator in which a pore channel is formed.

8. The method of manufacturing a lithium secondary battery according to claim 7,
wherein the separator has an ionic conductivity of 9.0 × 10⁻⁴ S/cm to 1.0 × 10⁻⁴ S/cm.

9. The method of manufacturing a lithium secondary battery according to claim 1,
wherein the thermally treating step is performed before or after degassing.

10. The method of manufacturing a lithium secondary battery according to claim 1,
wherein the porous coating layer includes interstitial volume that is a space defined by the inorganic particles substantially in contact with each other,
the porous coating layer includes macro pores that are formed as the fluorine-based binder polymer is dissolved in the electrolytic solution, and
the interstitial volume and the macro pores exist together.

11. The method of manufacturing a lithium secondary battery according to claim 10,
wherein an average diameter of the macro pores is 1 to 5 times larger than that of the interstitial volume.

12. A separator for a lithium secondary battery, comprising:
a porous polymer substrate and a porous coating layer formed on at least one surface of the porous polymer substrate,
wherein the porous coating layer contains inorganic particles and a fluorine-based binder polymer,
the porous coating layer includes interstitial volume that is a space defined by the inorganic particles substantially in contact with each other,
the porous coating layer simultaneously includes macro pores larger than the interstitial volume,
the interstitial volume and the macro pores exist together in the porous coating layer, and
the separator has an ionic conductivity of 9.0 × 10⁻⁴ S/cm to 1.0 × 10⁻⁴ S/cm.

13. The separator for a lithium secondary battery according to claim 12,
wherein the macro pores are formed as the fluorine-based binder polymer is dissolved in an electrolytic solution.

14. A lithium secondary battery, which includes a positive electrode, a negative electrode and a separator interposed between the positive electrode and the negative electrode,
wherein the separator is the separator according to claim 12 or 13.
